# EUROPÄISCHE PATENTANMELDUNG

(11) **EP 3 176 389 A1**
(43) Veröffentlichungstag der Anmeldung: **07.06.2017**
(21) Anmeldenummer: 16198247.5
(22) Anmeldetag: 10.11.2016
(51) Int. Cl.: F01L 1/047

(54) **VERSTELLBARE NOCKENWELLE**

(30) Priorität: 02.12.2015 DE 102015224012
(71) Anmelder: Mahle International GmbH, 70376 Stuttgart (DE)
(72) Erfinder: FLENDER, Thomas, 71735 Eberdingen (DE); KREISIG, Michael, 70839 Gerlingen (DE); ROMMEL, Jürgen, 71576 Burgstetten (DE); STEICHELE, Stefan, 70839 Gerlingen (DE)
(74) Vertreter: BRP Renaud & Partner mbB Rechtsanwälte Patentanwälte Steuerberater

(57) **Zusammenfassung**

Die Erfindung betrifft eine verstellbare Nockenwelle (1) mit
- einer Innenwelle (2) und einer koaxial dazu angeordneten Außenwelle (3),
- einem ersten Nocken (5), der drehfest mit der Innenwelle (2) verbunden ist,
- einem zweiten Nocken (7), der drehfest mit der Außenwelle (3) verbunden ist.

Erfindungswesentlich ist dabei, dass zumindest zwei fest mit der Außenwelle (3) verbundene Lagerelemente (8,9) vorgesehen sind, zwischen denen der erste Nocken (5) angeordnet ist und die den ersten Nocken (5) und über diesen auch die Innenwelle (2) in Axialrichtung bezüglich der Außenwelle (3) fixieren.

## Beschreibung

Die vorliegende Erfindung betrifft eine verstellbare Nockenwelle mit einer Innenwelle und einer koaxial dazu angeordneten Außenwelle. Die Erfindung betrifft außerdem eine Brennkraftmaschine mit einer solchen Nockenwelle.

Gattungsgemäße Nockenwellen sind hinlänglich bekannt und dienen insbesondere der Variabilität hinsichtlich einer Ventilöffnungsdauer. Um dabei einen langfristig zuverlässigen Betrieb ermöglichen zu können, ist es erforderlich, sowohl die Innenwelle als auch die Außenwelle in Axialrichtung zu lagern. Dies ist insbesondere auch deshalb von großer Bedeutung, da die mit der Innenwelle verstifteten Nocken nur dann leichtgängig verstellbar sind, sofern die in entsprechenden Langlöchern der Außenwelle geführten Stifte nicht reiben, das heißt mit einem Rand des jeweiligen Langlochs in Kontakt treten. Zur Verstellung derartiger verstellbarer Nockenwellen wird üblicherweise ein Phasensteller mit einem Rotor und einem Stator verwendet, wobei der Rotor fest mit der Innenwelle und in Axialrichtung fest mit dem Stator des Phasenstellers verbunden ist. Der Stator des Phasenstellers wiederum ist mit der Außenwelle in Axialrichtung verbunden. Somit wird sowohl die Außenwelle als auch die Innenwelle mittels des Phasenstellers, das heißt konkret mittels des Stators und des Rotors des Phasenstellers, in Axialrichtung fixiert.

Die vorliegende Erfindung beschäftigt sich nun mit dem Problem, für eine Nockenwelle der gattungsgemäßen Art eine verbesserte oder zumindest eine alternative Ausführungsform anzugeben, bei welcher insbesondere eine Axiallagerung der Innenwelle ohne eine direkte Fixierung mit einem Rotor eines Phasenstellers erfolgen soll.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Innenwelle einer verstellbaren Nockenwelle nicht wie bislang in Axialrichtung an einem Rotor eines Phasenstellers zu lagern, sondern diese Axiallagerung über die Außenwelle zu bewirken. Hierdurch ist insbesondere eine schwimmende Lagerung in Axialrichtung der Innenwelle relativ zu einem Rotor eines Phasenstellers möglich, was insbesondere eine vereinfachte Montage und einen besseren Ausgleich von Fertigungstoleranzen ermöglicht. Die erfindungsgemäß verstellbare Nockenwelle weist dabei in bekannter Weise eine Innenwelle sowie eine koaxial dazu angeordnete Außenwelle auf sowie einen ersten Nocken, der drehfest mit der Innenwelle verbunden ist und einen zweiten Nocken, der drehfest mit der Außenwelle verbunden ist. Erfindungsgemäß sind nun zumindest zwei fest mit der Außenwelle verbundene Lagerelemente vorgesehen, zwischen denen der erste Nocken angeordnet ist und die den ersten Nocken und über diesen auch die Innenwelle in Axialrichtung bezüglich der Außenwelle fixieren. In diesem Fall ist somit eine Axiallagerung der Nockenwelle ausschließlich über die Außenwelle möglich bzw. denkbar, da die Innenwelle in Axialrichtung über die Außenwelle fixiert wird und dadurch keiner eigenen externen Lagerung bedarf. In gleicher Weise ermöglicht die erfindungsgemäße Nockenwelle auch eine Axiallagerung der Innenwelle an einem Rotor eines Phasenstellers, ohne die Außenwelle separat am Stator des Phasenstellers in Axialrichtung fixieren zu müssen, da die Außenwelle bei der erfindungsgemäßen Nockenwelle über die Innenwelle in Axialrichtung fixiert wird.

Bei einer vorteilhaften Weiterbildung der erfindungsgemäßen Lösung sind weitere erste Nocken und zweite Nocken vorgesehen, wobei jedoch nur einer der ersten Nocken durch Lagerelemente fixiert ist. Dabei wird üblicherweise derjenige erste Nocken zur Axiallagerung verwendet, der direkt benachbart zum Phasensteller angeordnet ist. Dabei ist selbstverständlich klar, dass die erfindungsgemäße Nockenwelle weitere erste, mit der Innenwelle verbundene und zweite, mit der Außenwelle verbundene Nocken aufweisen kann.

Bei einer weiteren vorteilhaften Ausführungsform der erfindungsgemäßen Lösung ist zumindest ein Lagerelement als zweiter Nocken ausgebildet. Bei einer derartigen Ausführungsform bildet somit zumindest ein zweiter Nocken eines der Lagerelemente, so dass dieses nicht durch ein separates Lagerelement, bspw. einen Lagerring, gebildet werden muss, wodurch nicht nur eine Montageerleichterung, sondern auch eine Bauraumoptimierung und ein Kostenvorteil erzielt werden können.

Bei einer weiteren vorteilhaften Ausführungsform der erfindungsgemäßen Lösung ist zumindest ein Lagerelement als Lagerring ausgebildet, wobei ein derartiger Lagerring oder generell ein Lagerelement durch eine stoff-, kraft- oder formschlüssige Verbindung mit der Außenwelle fest verbunden werden kann. Das Lagerelement kann beispielsweise durch einen thermischen Fügesitz, durch Schweißen, durch Löten, durch Kleben oder durch einen Presssitz auf der Außenwelle fixiert sein. Bereits diese nicht abschließende Aufzählung lässt erahnen, welche mannigfaltige Fertigungsmöglichkeiten zur Fixierung des Lagerelements bzw. des Lagerrings auf der Außenwelle bestehen.

Zweckmäßig greift zumindest ein Lagerelement in eine Nut auf der Außenwelle ein und ist darüber in Axialrichtung fixiert. Zusätzlich oder alternativ zu der zuvor genannten Befestigung des Lagerelements auf der Außenwelle, kann dieses selbstverständlich auch über eine Art Formschlussverbindung mit der Außenwelle verbunden sein, bspw. indem ein derartiges Lagerelement in eine zugehörige und komplementär dazu ausgebildete Nut auf der Außenwelle der Nockenwelle eingreift.

Bei einer weiteren vorteilhaften Ausführungsform der erfindungsgemäßen Lösung ist zwischen dem ersten Nocken und dem Lagerelement ein Distanzelement, insbesondere eine Hülse, angeordnet. Dies bietet den großen Vorteil, dass eine derartige Hülse vergleichsweise einfach auf die Außenwelle der Nockenwelle aufgeschoben werden kann, wobei sich die Hülse einerseits bspw. an einem durch einen zweiten Nocken gebildeten Lagerelement abstützt und andererseits am ersten Nocken. In diesem Fall wäre somit zumindest eines der Lagerelemente ein zweiter Nocken, welcher jedoch ohne das zusätzliche Distanzelement in Axialrichtung zu weit vom ersten Nocken entfernt wäre, um diesen in Axialrichtung zu fixieren. Hier setzt das erfindungsgemäße Distanzelement an, welches nun diese Axialdistanz überbrückt und den ersten Nocken gegenüber dem Lagerelement oder insbesondere gegenüber dem zweiten Nocken in Axialrichtung abstützt.

Zweckmäßig weist der Phasensteller einen Rotor und einen Stator auf, dessen Stator axial fest mit der Außenwelle und dessen Rotor axial beweglich mit der Innenwelle verbunden ist, oder dessen Stator axial beweglich mit der Außenwelle und dessen Rotor axial fest mit der Innenwelle verbunden ist, oder dessen Stator axial beweglich mit der Außenwelle und dessen Rotor axial beweglich mit der Innenwelle verbunden ist. Durch diese Aufzählung lässt sich erahnen, dass mit der erfindungsgemäßen Nockenwelle wahlweise eine schwimmende Lagerung der Innenwelle, eine schwimmende Lagerung der Außenwelle oder aber eine schwimmende Lagerung beider Wellen bezüglich des Phasenstellers möglich ist, wobei im letzten Fall die Nockenwelle anderweitig in Axialrichtung, das heißt nicht über den Phasensteller, gelagert werden muss.

Die vorliegende Erfindung beruht weiter auf dem allgemeinen Gedanken, eine Brennkraftmaschine mit zumindest einer solchen Nockenwelle anzugeben, wobei eine derartige Brennkraftmaschine die Vorteile der erfindungsgemäßen Nockenwelle aufgreift, insbesondere einfacher zu montieren ist und einen größeren Ausgleich von Fertigungstoleranzen ermöglicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,

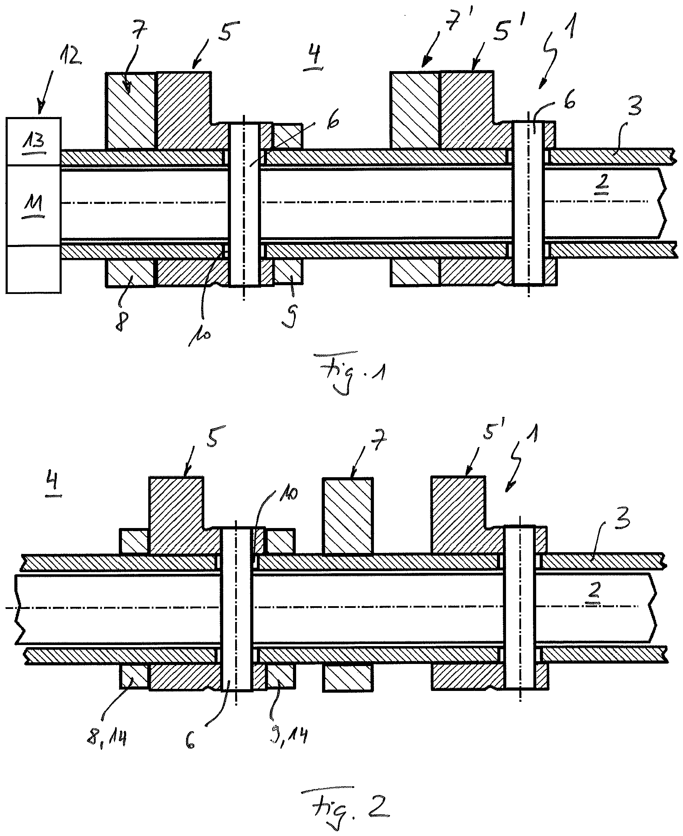

- Fig. 1 bis 4: jeweils unterschiedliche Ausführungsformen einer erfindungsgemäßen Nockenwelle.

Entsprechend den Fig. 1 bis 4, weist eine erfindungsgemäße verstellbare Nockenwelle 1 eine Innenwelle 2 sowie eine koaxial dazu angeordnete Außenwelle 3 auf. Die Nockenwelle 1 kann dabei bspw. in einer Brennkraftmaschine 4 eines Kraftfahrzeugs eingebaut sein. Die Nockenwelle 1 weist darüber hinaus einen ersten Nocken 5 auf, der drehfest über einen Stift 6 mit der Innenwelle 2 verbunden ist, sowie einen zweiten Nocken 7, der drehfest mit der Außenwelle 3 verbunden ist. Erfindungsgemäß sind nun zumindest zwei fest mit der Außenwelle verbundene Lagerelemente 8, 9 vorgesehen, zwischen denen der erste Nocken 5 angeordnet ist und die den ersten Nocken 5 und über diesen auch die Innenwelle 2 in Axialrichtung bezüglich der Außenwelle 3 lagern bzw. fixieren. Betrachtet man die Fig. 1 bis 4 näher, so kann man erkennen, dass der Stift 6 spielfrei die Innenwelle 2 quert und ebenso spielfrei mit dem ersten Nocken 5 verbunden ist. In der Außenwelle 3 ist dabei ein sich in Umfangsrichtung erstreckendes Langloch 10 vorgesehen, durch welches der Stift 6 die Außenwelle 3 quert. Um dabei ein langfristig kraftarmes Verstellen der Innenwelle 2 relativ zur Außenwelle 3 zu ermöglichen, muss eine spielfreie Führung des Stiftes 6 im Langloch 10 gewährleistet werden, was jedoch nur über eine entsprechende Axiallagerung der Außenwelle 3 relativ zur Innenwelle 2 möglich ist. Bislang wurden hierzu bspw. die Innenwelle 2 in Axialrichtung fest mit einem Rotor 11 eines Phasenstellers 12 und die Außenwelle 3 in Axialrichtung fest mit einem Stator 13 des Phasenstellers 2 gekoppelt. Dies ist durch die erfindungsgemäße Nockenwelle 1 nun nicht mehr erforderlich, da hier bspw. die Innenwelle 2 in Axialrichtung schwimmend zum Rotor 11 des Phasenstellers 12 gelagert werden kann, solange bspw. die Außenwelle 3 in Axialrichtung fest am Stator 13 des Phasenstellers 12 angebunden wird. Dies ist selbstverständlich auch in umgekehrter Art und Weise denkbar, so dass bspw. die Außenwelle 3 in Axialrichtung schwimmend zum Stator 13 des Phasenstellers 12 gelagert werden kann, sofern bspw. die Innenwelle 2 in Axialrichtung fest zum Rotor 11 des Phasenstellers 12 gelagert wird, da bei der erfindungsgemäßen Nockenwelle 1 eine Axialfixierung der Innenwelle 2 relativ zur Außenwelle 3 nicht über den Phasensteller 12 erfolgt, sondern über die Lagerelemente 8, 9. Rein theoretisch ist es selbstverständlich auch denkbar, dass sowohl die Innenwelle 2 als auch die Außenwelle 3 axial schwimmend bezüglich des Phasenstellers 12, das heißt axial schwimmend zum Rotor 11 und zum Stator 12 gelagert ist, wobei in diesem Fall selbstverständlich eine anderweitige Axiallagerung der Nockenwelle 1 erfolgen muss.

Betrachtet man die Fig. 1 bis 4, so kann man erkennen, dass selbstverständlich neben dem ersten Nocken 5 und dem zweiten Nocken 7 auch weitere zusätzliche erste Nocken 5' und zweite Nocken 7' vorhanden sein können, wobei üblicherweise die Axiallagerung der Nockenwelle 1 über den ersten Nocken 5 erfolgt, der direkt benachbart zum Phasensteller 12 angeordnet ist.
Besonders bevorzugt ist dabei zumindest ein Lagerelement 8, 9, gemäß der Fig. 1 das Lagerelement 8, als zweiter Nocken 7 ausgebildet, so dass der zweite Nocken 7 zugleich das erste Lagerelement 8 bildet und kein zusätzliches erstes Lagerelement 8 vorgesehen werden muss.

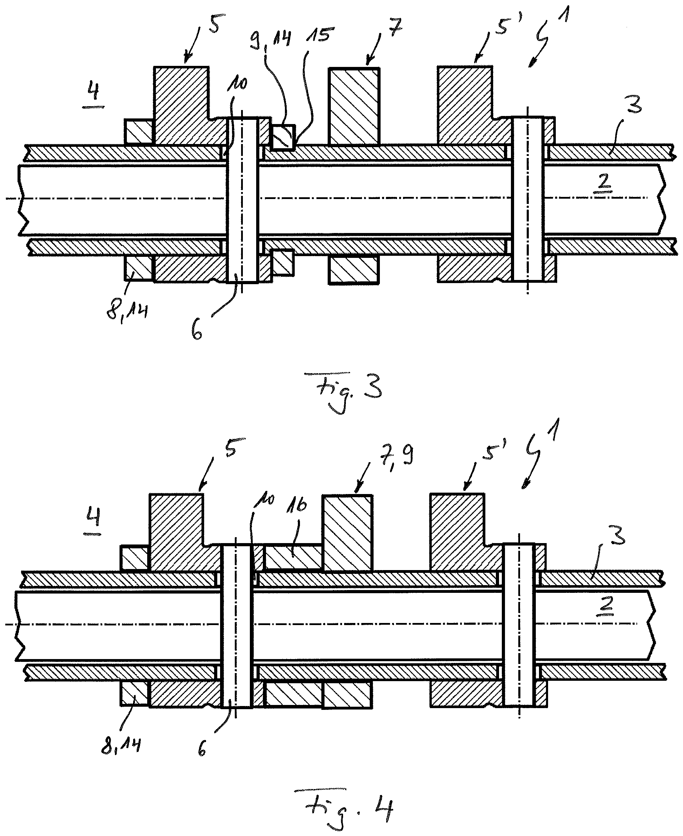

Zumindest eines der Lagerelemente 8, 9, kann dabei selbstverständlich auch als Lagerring 14 ausgebildet sein, wie dies gemäß den Fig. 1 bis 4 ebenfalls in unterschiedlichen Ausführungsformen dargestellt ist. So ist gemäß der Fig. 1 lediglich das Lagerelement 9, gemäß den Fig. 2 und 3 beide Lagerelemente 8, 9 und gemäß der Fig. 4 lediglich das Lagerelement 8 als Lagerring 14 ausgebildet. Zumindest ein Lagerelement 8, 9, insbesondere ein als Lagerring 14 ausgebildetes Lagerelement 9, kann dabei in eine Nut 15 (vgl. Fig. 3) auf der Außenwelle 3 eingreifen, insbesondere formschlüssig eingreifen, wobei selbstverständlich auch beide Lagerelemente 8, 9 durch derartige Nuten 15 formschlüssig in Axialrichtung auf der Außenwelle 3 fixiert werden können.

Ist das Lagerelement 8, 9 bspw. als zweiter Nocken 7 oder als Lagerring 14 ausgebildet, so kann eine Axialfixierung der Lagerelemente 8, 9 auch mittels eines thermischen Fügesitzes, durch Schweißen, durch Löten, durch Kleben oder durch einen Presssitz auf der Außenwelle 3 erfolgen.

Gemäß der Fig. 4 ist eine weitere mögliche Ausführungsform der erfindungsgemäßen Nockenwelle 1 gezeigt, bei welcher zwischen dem ersten Nocken 5 und dem Lagerelement 9 ein Distanzelement 16, insbesondere in der Art einer Hülse, angeordnet ist. Das zweite Lagerelement 9 ist in diesem Fall als zweiter Nocken 7 ausgebildet, der ohnehin axial fest auf der Außenwelle 3 verbunden ist. Durch eine derartige Hülse 16 ist es möglich, auch einen beabstandet zum ersten Nocken 5 angeordneten zweiten Nocken 7 als Lagerelement 9 zu nutzen und lediglich ein zusätzliches Lagerelement 8 vorzusehen, um den ersten Nocken 5 in Axialrichtung auf der Außenwelle 3 zu fixieren und über den in Axialrichtung fixierten ersten Nocken 5 mittels des Stifts 6 auch die Innenwelle 2 in Axialrichtung zu fixieren.

Mit der erfindungsgemäßen Nockenwelle 1 und der erfindungsgemäßen Brennkraftmaschine 4 ist es erstmals möglich, eine Nockenwelle 1 zu schaffen, bei welcher eine Axiallagerung der Innenwelle 2 relativ zur Außenwelle 3 über die Außenwelle 3 oder umgekehrt eine Axiallagerung der Außenwelle 3 relativ zur Innenwelle 2 über die Innenwelle 3 erfolgt, so dass entweder die Innenwelle 2 oder die Außenwelle 3 schwimmend bezüglich eines Rotors 11 bzw. eines Stators 12 eines Phasenstellers 12 gelagert werden kann und dadurch die Möglichkeit eröffnet, Fertigungstoleranzen kompensieren zu können. Rein theoretisch ist auch eine schwimmende Lagerung beider Wellen 2, 3 relativ zum Phasensteller 12 denkbar, wobei in diesem Fall die erfindungsgemäße Nockenwelle 1 anderweitig in Axialrichtung gelagert werden müsste.

## Patentansprüche

1. Verstellbare Nockenwelle (1) mit
- einer Innenwelle (2) und einer koaxial dazu angeordneten Außenwelle (3),
- einem ersten Nocken (5), der drehfest mit der Innenwelle (2) verbunden ist,
- einem zweiten Nocken (7), der drehfest mit der Außenwelle (3) verbunden ist,
**dadurch gekennzeichnet,**
**dass** zumindest zwei fest mit der Außenwelle (3) verbundene Lagerelemente (8,9) vorgesehen sind, zwischen denen der erste Nocken (5) angeordnet ist und die den ersten Nocken (5) und über diesen auch die Innenwelle (2) in Axialrichtung bezüglich der Außenwelle (3) fixieren.

2. Nockenwelle nach Anspruch 1,
**dadurch gekennzeichnet,**
**dass** ein Phasensteller (12) vorgesehen ist, wobei der erste Nocken (5) und die Lagerelemente (8,9) direkt benachbart zum Phasensteller (12) angeordnet sind.

3. Nockenwelle nach Anspruch 1 oder 2,
**dadurch gekennzeichnet,**
**dass** weitere erste Nocken (5') und zweite Nocken (7') vorgesehen sind, wobei jedoch nur einer der ersten Nocken (5) durch Lagerelemente (8,9) fixiert ist.

4. Nockenwelle nach einem der vorhergehenden Ansprüche,
**dadurch gekennzeichnet,**
**dass** zumindest ein Lagerelement (8,9) als zweiter Nocken (7) ausgebildet ist.

5. Nockenwelle nach einem der Ansprüche 1 bis 4,
**dadurch gekennzeichnet,**
**dass** zumindest ein Lagerelement (8,9) als Lagerring (14) ausgebildet ist.

6. Nockenwelle nach einem der Ansprüche 1 bis 5,
**dadurch gekennzeichnet,**
**dass** zumindest ein Lagerelement (8,9) durch einen thermischen Fügesitz, durch Schweißen, Löten, Kleben oder durch einen Presssitz auf der Außenwelle (3) fixiert ist.

7. Nockenwelle nach einem der Ansprüche 1 bis 6,
**dadurch gekennzeichnet,**
**dass** zumindest ein Lagerelement (8,9) in eine Nut (15) auf der Außenwelle (3) eingreift und darüber in Axialrichtung fixiert ist.

8. Nockenwelle nach einem der Ansprüche 1 bis 7,
**dadurch gekennzeichnet,**
**dass** zwischen dem ersten Nocken (5) und dem Lagerelement (8,9) ein Distanzelement (16), insbesondere eine Hülse, angeordnet ist.

9. Nockenwelle nach einem der Ansprüche 2 bis 8,
**dadurch gekennzeichnet,**
**dass** der Phasensteller (12) einen Rotor (11) und einen Stator (13) aufweist,
- dessen Stator (13) axial fest mit der Außenwelle (3) und dessen Rotor (11) axial beweglich mit der Innenwelle (2) verbunden ist, oder
- dessen Stator (13) axial beweglich mit der Außenwelle (3) und dessen Rotor (11) axial fest mit der Innenwelle (2) verbunden ist, oder
- dessen Stator (13) axial beweglich mit der Außenwelle (3) und dessen Rotor (11) axial beweglich mit der Innenwelle (2) verbunden ist.

10. Brennkraftmaschine (4) mit einer Nockenwelle (1) nach einem der Ansprüche 1 bis 9.
